# EUROPÄISCHE PATENTSCHRIFT

(11) **EP 1 622 241 B1**
(45) Veröffentlichungstag und Bekanntmachung des Hinweises auf die Patenterteilung: **28.02.2007**
(21) Anmeldenummer: 05105686.9
(22) Anmeldetag: 24.06.2005
(51) Int. Cl.: H02K 5/10, H02K 11/04

(54) **Elektromotor mit hohem Schutzgrad gegen das Eindringen von Fremdkörpern und Nässe**
Electric motor with high degree of protection against ingress of foreign matter and humidity
Moteur électrique avec degré élevé de protection contre la pénétration des corps étrangers et de l'humidité

(30) Priorität: 06.07.2004 DE 202004010513 U
(43) Veröffentlichungstag der Anmeldung: 01.02.2006
(73) Patentinhaber: ebm-papst Mulfingen GmbH & Co.KG, 74673 Mulfingen (DE)
(72) Erfinder: Hofmann, Walter, 74673 Mulfingen (DE); Schwarz, Jochen, 74214 Schöntal-Berlichingen (DE); Streng, Gunter, 74575 Schrozberg (DE)
(74) Vertreter: Patentanwälte Dr. Solf & Zapf

(56) Entgegenhaltungen:
- EP-A- 1 361 644
- WO-A-01/28074
- DE-A1- 10 313 274

## Beschreibung

Die Erfindung betrifft einen Elektromotor mit hohem Schutzgrad gegen das Eindringen von Fremdkörpern und Nässe, insbesondere einen elektronisch kommutierten Außenläufer-Gleichstrommotor, mit einem Stator, mit einem Rotor und mit einem quer zur Motorwelle verlaufenden, in seinem Innenraum eine Leiterplatte mit Steuer-, Regel- bzw. Kommutierungselektronik aufnehmenden Elektronikgehäuse, wobei sich in einem Boden des Elektronikgehäuses Anschlußöffnungen befinden, die von den Stator und die Leiterplatte miteinander verbindenden Anschlußelementen durchgriffen werden und wobei eine Dichtung zumindest die von den Anschlußelementen durchgriffenen Anschlußöffnungen des Bodens des Elektronikgehäuses abdichtet.

Hinsichtlich des Eindringens von Fremdkörpern und Nässe, wird durch Normen, insbesondere die Normen IEC 529 bzw. DIN/IEC EN 60034, Teil 5, die eine Einteilung in verschiedene Schutzarten enthalten, ein durch Schutzklassen ausgedrückter Schutzgrad der elektrischen Betriebsmittel festgelegt. Die Angabe der Schutzklassen erfolgt dabei durch einen Buchstabencode und zwei Kennziffern, von denen die erste den Schutz gegen feste Fremdkörper und die zweite den Schutz gegen Wasser beschreibt. So bedeutet beispielsweise IP 00 (IP - "International Protection"), daß weder ein Berührungsschutz und Schutz gegen feste Fremdkörper, noch ein Wasserschutz vorliegen. Ein hoher Schutzgrad wird bei Elektromotoren dabei insbesondere dadurch erreicht, daß abzudichtende Teile miteinander vergossen werden.

Ein ähnlicher Elektromotor, wie der eingangs genannte, ist beispielsweise in der DE 103 13 274 A1 beschrieben. Für diesen bekannten Motor wird angegeben, daß er einen Schutzgrad von IP 54 gewährleistet. Hierbei bezeichnet in der Angabe die erste Ziffer 5, daß ein vollständiger Schutz gegen Berührung und ein Schutz gegen Staubablagerungen gewährleistet ist, während die zweite Ziffer 4 für das Vorhandensein eines Schutzes gegen Spritzwasser aus allen Richtungen steht.

Ein Elektromotor der eingangs beschriebenen Art ist aus der EP 1 361 644 A2 bekannt. Dieses Dokument beschreibt einen elektronisch kommutierten Außenläufer-Gleichstrommotor, mit einem Stator und einem den Stator umschließenden mit Permanentmagneten versehenen Rotor, wobei ein zentrisch innerhalb des Stators angeordnetes Lagertragrohr in seinem Innern die Welle des Rotors aufnimmt und auf der dem Rotor abgewandten Seite in ein quer zur Motorwelle verlaufendes, die Leiterplatte mit Steuer-, Regel- bzw. Kommutierungselektronik aufnehmendes mit einem Gehäusedeckel verschlossenes Elektronikgehäuse übergeht. Der Boden des Gehäuses wird von die Wicklung und eine Leiterplatte miteinander verbindenden Anschlußelementen durchgriffen, wobei die Anschlußelemente an einer stirnseitigen, den Wickelkopf der Statorwicklungen gegenüber dem Statorblechpaket isolierenden Kunststoffschicht des Stators befestigt sind. Der Motor weist unterschiedliche Abdichtelemente auf - ein erstes, zwischen Wickelkopf und Bodenscheibe des Elektronikgehäuses angeordnetes Abdichtelement, welches zumindest die von Anschlußelementen durchgriffenen Öffnungen des Bodenteils des Elektronikgehäuses abdichtet, und ein zweites Abdichtelement, welches die Fügespalte zwischen den Anlageflächen des Gehäusedeckels und dem Elektronikgehäuse dicht verschließt sowie zur Aufnahme von elektrischen Kontaktmitteln zum Verbinden des Motors mit der Versorgungsspannung ausgebildet ist.

Der Erfindung liegt die Aufgabe zu Grunde, einen Elektromotor der eingangs beschriebenen Art zu schaffen, der sich bei Gewährleistung eines hohen Schutzgrades gegen das Eindringen von Fremdkörpern und Nässe durch eine vereinfachte Montagemöglichkeit auszeichnet.

Diese Aufgabe wird erfindungsgemäß dadurch gelöst, daß die Dichtung eine auf dem Boden des Elektronikgehäuses angeordnete plattenartige Zwischenwand umfaßt, die einerseits den Innenraum des Elektronikgehäuses und andererseits einen Spalt zwischen dem Elektronikgehäuse und einer aus dem Stator und dem Rotor gebildeten Motorbaueinheit abdichtet.

Die erfindungsgemäße Ausbildung der Dichtung und deren Anordnung auf dem Boden des Elektronikgehäuses gestattet es vorteilhafterweise, daß ein das Elektronikgehäuse verschließender Deckel mit der Zwischenwand, eine abgeschlossene auf den Boden des Elektronikgehäuses aufsteckbare und mit diesem insbesondere verschraubbare vormontierbare Gehäuse-Baueinheit bildet. Die Montage des erfindungsgemäßen Elektromotors gestaltet sich solchermaßen sicher und genau und insbesondere besonders aufwandsarm, wobei auf ein integrales Miteinander-Vergießen der zu verbindenden und gegen die Umgebungseinflüsse abzudichtenden Teile verzichtet werden kann.

Der Boden des Gehäuses kann dabei mit Vorteil Bestandteil einer ebenfalls vormontierbaren Motor-Baueinheit sein, in der der Boden durch einen, insbesondere einstückig mit einem Lagertragrohr des Stators verbundenen, Statorflansch gebildet ist, und die gegebenenfalls mit weiteren der Dichtung zugehörigen Teile ausgestattet ist, wie mit einem Loch-Dichtungsteil, das im Montagezustand an der Zwischenwand zur Anlage kommt, mit dieser verbindbar ist und bevorzugt formschlüssig und verrastend, in die Anschlußöffnungen des Bodens des Elektronikgehäuses eingreift.

Es ist mit Vorteil auch möglich, daß die Zwischenwand jeweils die Durchgriff-Öffnungen zur Durchführung der Anschlußelemente umgebende Wannen - Platten-Wannen - zur Aufnahme einer Dichtungsmasse aufweist. Bei einer solchen Ausführung kann ein vorhandenes Loch-Dichtungsteil ebenfalls Wannen - Scheiben-Wannen - zur Aufnahme der Dichtungsmasse aufweisen, die derart komplementär zu den Platten-Wannen der Zwischenwand ausgebildet sind, daß sie jeweils mit diesen einen durch zwei Halbschalen umschlossenen gekapselten Raum zur Aufnahme der Dichtungsmasse bilden. Anstelle eines Gesamtvergießens der Bauteile miteinander erfolgt somit vorteilhafterweise nur ein Vergießen bestimmter, gekapselter Bereiche der Dichtung.

In alternativer Ausführung kann anstelle der Dichtungsmasse auch ein spezielles die Anschlußelemente umfassenden Dichtungs-Einsatzteil für das Loch-Dichtungsteil in den durch die Wannen gebildeten gekapselten Raum eingesetzt werden. Ein Vergießen kann somit bedarfsweise vollständig vermieden werden.

Weitere vorteilhafte Ausführungen der Erfindung sind in den Unteransprüchen und der nachfolgenden Beschreibung enthalten. Anhand zweier in den beiliegenden Zeichnungsfiguren dargestellter Ausführungsbeispiele wird die Erfindung näher erläutert. Es zeigen:
- Fig. 1: eine Axialschnitt-Darstellung eines erfindungsgemäßen Elektromotors in einer ersten Ausführung, in der eine auf - eine Stator und Rotor umfassende - Motor-Baueinheit aufsteckbare und mit dieser verbindbare Gehäuse-Baueinheit getrennt von der Motor-Baueinheit abgebildet ist,
- Fig. 2: eine Fig. 1 entsprechende Darstellung, in der die Motor-Baueinheit und die Gehäuse-Baueinheit im Zusammenbau gezeigt sind,
- Fig. 3: eine in Fig. 2 mit X bezeichnete Einzelheit,
- Fig. 4: eine perspektivische Draufsicht auf einen Boden des Elektronikgehäuses des erfindungsgemäßen Elektromotors,
- Fig. 5: eine in Fig. 4 mit U bezeichnete Einzelheit,
- Fig. 6: eine Draufsicht auf die dem Elektronikgehäuse zugewandte Seite der Motor-Baueinheit des erfindungsgemäßen Elektromotors,
- Fig. 7: eine entlang der Linie K-K in Fig. 6 geschnittene Einzelheit,
- Fig. 8: eine entlang der Linie I-I in Fig. 6 geschnittene Einzelheit,
- Fig. 9: eine entlang der Linie H-H in Fig. 6 geschnittene Einzelheit,
- Fig. 10: eine perspektivische Aufsicht auf eine dem Boden des Elektronikgehäuses zugewandte Seite einer bevorzugten Ausführung einer Zwischenwand des erfindungsgemäßen Elektromotors,
- Fig. 11: eine perspektivische Aufsicht auf eine dem Deckel des Elektronikgehäuses zugewandte Seite einer bevorzugten Ausführung einer Zwischenwand des erfindungsgemäßen Elektromotors,
- Fig. 12: die in Fig. 2 mit X bezeichnete Einzelheit, jedoch in alternativer Ausführung,
- Fig. 13 bis 15: verschiedene Ansichten eines bei der alternativen Ausführung gemäß Fig. 10 zur Anwendung kommenden Dichtungs-Einsatzteils des erfindungsgemäßen Elektromotors.

In den Figuren der Zeichnung sind dieselben Teile auch stets mit denselben Bezugszeichen versehen, so daß sie in der Regel auch jeweils nur einmal beschrieben werden.

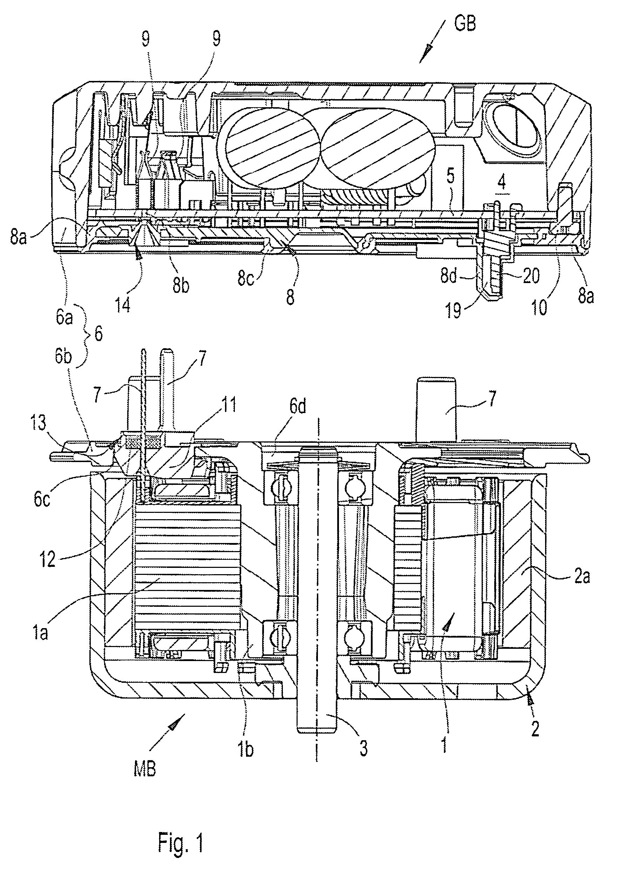

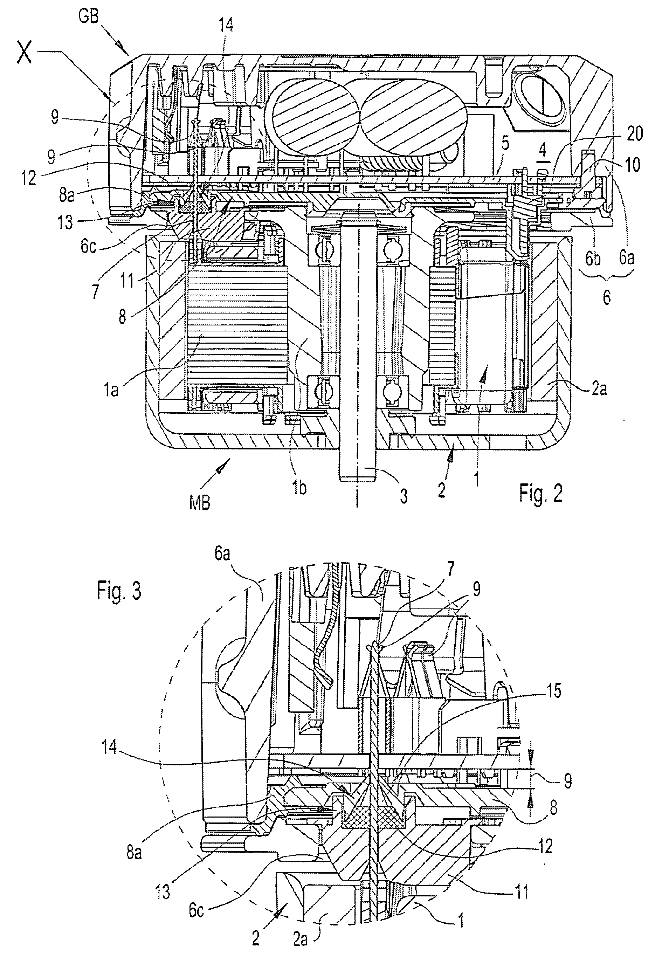

Wie zunächst Fig. 1 und Fig. 2 zeigen, umfaßt ein erfindungsgemäßer Elektromotor, bei dem es sich insbesondere um einen elektronisch kommutierten Außenläufer-Gleichstrommotor handelt, einen Stator 1, einen Rotor 2 und ein quer zur Motorwelle 3 verlaufendes, in seinem Innenraum 4 eine Leiterplatte 5 mit Steuer-, Regel- bzw. Kommutierungselektronik aufnehmenden Elektronikgehäuse 6, das aus einem Deckel 6a und aus einem Boden 6b besteht. Das Elektronikgehäuse 6 ist insbesondere auf der dem Rotor 2 abgewandten Seite angeordnet und kann - sowohl der Boden 6b, als auch der Deckel 6a - bevorzugt aus Metall, wie aus einer Aluminium-Druckgußlegierung, bestehen, wodurch eine hohe Stabilität und Wärmeleitfähigkeit erreicht wird.

Der Stator 1 wird von dem Rotor 2 topfförmig umgriffen, wobei Letzterer in bekannter Weise aus einem Rückschlußring gebildet ist, welcher an seiner inneren Umfangswand Permanentmagnete 2a trägt. Der Stator 1 besteht in ebenfalls bekannter Weise aus einem mit einer Statorwicklung bewickelten Statorblechpaket 1a, das den Magneten 2a des Rotors 2 radial gegenüberliegt.

Im Boden 6b des Elektronikgehäuses 6 befinden sich Anschlußöffnungen 6c, die im montierten Zustand von den Stator 1 und die Leiterplatte 5 miteinander verbindenden, insbesondere als Flachstecker ausgebildeten, Anschlußelementen 7 durchgriffen werden. Dabei dichtet eine mehrteilige, nachfolgend durch ihre Einzelelemente bezeichnete Dichtung zumindest die von den Anschlußelementen 7 durchgriffenen Anschlußöffnungen 6c des Bodens 6b des Elektronikgehäuses 6 ab. Durch die Dichtung wird ein hoher Schutzgrad gegen das Eindringen von Fremdkörpern und Nässe erreicht.

Erfindungsgemäß umfaßt die Dichtung eine auf dem Boden 6c des Elektronikgehäuses 6 angeordnete plattenartige Zwischenwand 8, die einerseits zur Raum- und andererseits zur Spaltabdichtung des Elektronikgehäuses 6 dient. Die Zwischenwand weist zur Abdichtung gegenüber dem Deckel 6a des Elektronikgehäuses 6 eine umlaufende Rand-Dichtlippe 8a auf.

Wie insbesondere Fig. 1 veranschaulicht, ist der erfindungsgemäße Elektromotor aus zwei voneinander einfach zu separierenden bzw. einfach aneinander zu montierenden Grundbaueinheiten MB, GB gebildet - aus einer den Stator 1 und Rotor 2 umfassenden Motor-Baueinheit MB und aus einer auf diese Motor-Baueinheit MB aufsteckbaren und mit dieser verbindbaren, insbesondere verschraubbaren, Gehäuse-Baueinheit GB.

Wie der obere Teil von Fig. 1 zeigt, weist die der Gehäuse-Baueinheit GB zugeordnete Zwischenwand 8 Durchgriff-Öffnungen 8b zur Durchführung der Anschlußelemente 7 beim Stecken auf. Neben der Zwischenwand 8 umfaßt die Gehäusebaueinheit GB dabei insbesondere den Deckel 6a des Elektronikgehäuses 6. Der Boden 6b ist der Motor-Baueinheit MB zugeordnet, wobei jedoch vorteilhafterweise die Zwischenwand 8 einen Boden für die Gehäuse-Baueinheit GB bildet.

Der Boden 6b des Elektronikgehäuses 6 ist durch einen, insbesondere einstückig mit einem Lagertragrohr 1b für das Blechpaket 1a des Stators 1 verbundenen Statorflansch gebildet. Aufgrund der Verbindung mit dem Lagertragrohr 1 b weist der Boden 6b des Elektronikgehäuses 6 somit einen zentrisch angeordneten Durchbruch 6d zur Aufnahme der Welle 3 des Motors auf. Die Welle 3 selbst ist im Lagertragrohr 1 b über im Abstand zueinander angeordnete, nicht näher bezeichnete Lagerelemente mit dem Stator 1 verbunden. Zur Randabdichtung des Durchbruchs 6d bzw. der Rohröffnung des Lagertragrohrs 1 b ist an der Zwischenwand 8 - wie insbesondere aus dem oberen Teil von Fig. 1 ersichtlich ist - eine Wellen-Dichtung 8c angeordnet.

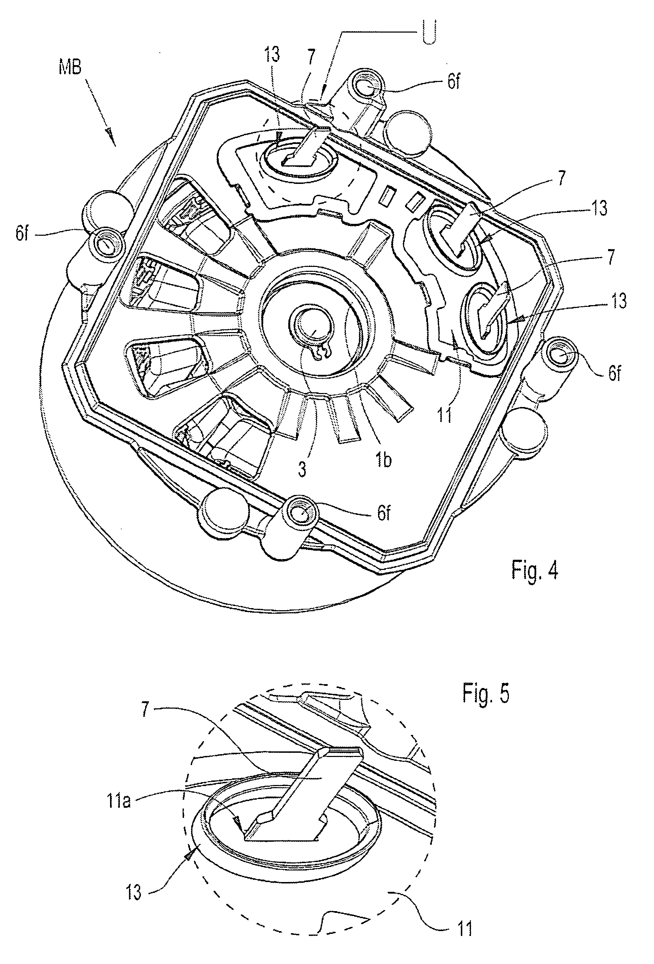

Auf der Leiterplatte 5 im Innenraum 4 der Gehäuse-Baueinheit GB sind nicht näher bezeichnete elektronische Bauelemente befestigt. Dabei kann die Leiterplatte 5 beidseitig bestückt sein, wobei kleinere Bauelemente auf der der Zwischenwand 8 zugewandten Seite der Leiterplatte 5 befestigt sind. Hierzu ist zwischen der Leiterplatte 5 und der Zwischenwand ein entsprechender Abstand 9 (Fig. 3) vorgesehen. Die Befestigung der Leiterplatte 5 erfolgt einerseits beispielsweise über Schrauben 10, die in den Deckel 6a des Elektronikgehäuses 6 eingedreht und dann von der Zwischenwand 8 abgedeckt werden, sowie andererseits über die elektrischen Anschlußelemente 7, die die Zwischenwand 8 und den Boden 6b des Elektronikgehäuses 6 an mehreren Stellen durchgreifen, um die Statorwicklung mit elektrischen Kontaktmitteln 9, insbesondere Kontaktzungen, der Leiterplatte 5 zu verbinden. Die Anschlußelemente 7 sind dabei - wie der untere Teil von Fig. 1, Fig. 2 und auch die vergrößerte Darstellung in Fig. 3 veranschaulichen - auf der dem Rotor 2 abgewandten Seite in Öffnungen eines auf der Stirnseite mit Kunststoff umspritzten Statorblechpaketes eingesetzt und stehen daraus axial hervor. Die Anschlußelemente 7 können dabei dicht am Statorbereich seitliche Fortsätze aufweisen, an denen die Enden der Statorwicklung z.B. mittels Preßschweißen befestigt sind.

Der untere Teil von Fig. 1, Fig. 2 sowie die vergrößerte Darstellung in Fig. 3 veranschaulichen des Weiteren, daß die Dichtung neben der Zwischenwand 8 auch ein an der Zwischenwand 8 zur Anlage kommendes, scheibenartiges Loch-Dichtungsteil 11 umfaßt, das einerseits, bevorzugt formschlüssig und dabei insbesondere verrastend, in die Anschlußöffnungen 6c des Bodens 6 des Elektronikgehäuses 6 eingreift und andererseits mit der Zwischenwand 8 verbindbar ist. Die Verbindung erfolgt dabei gemäß der ersten Ausführung der Erfindung, wie nachfolgend im Detail ausgeführt wird, insbesondere stoffschlüssig, über einen Klebstoff oder eine Vergußmasse als Dichtungsmasse 12. Das Loch-Dichtungsteil 11 kann mit Vorteil insbesondere aus einem thermoplastischen Hartstoff, z. B. glasfaserverstärktem Polyamid, bestehen.

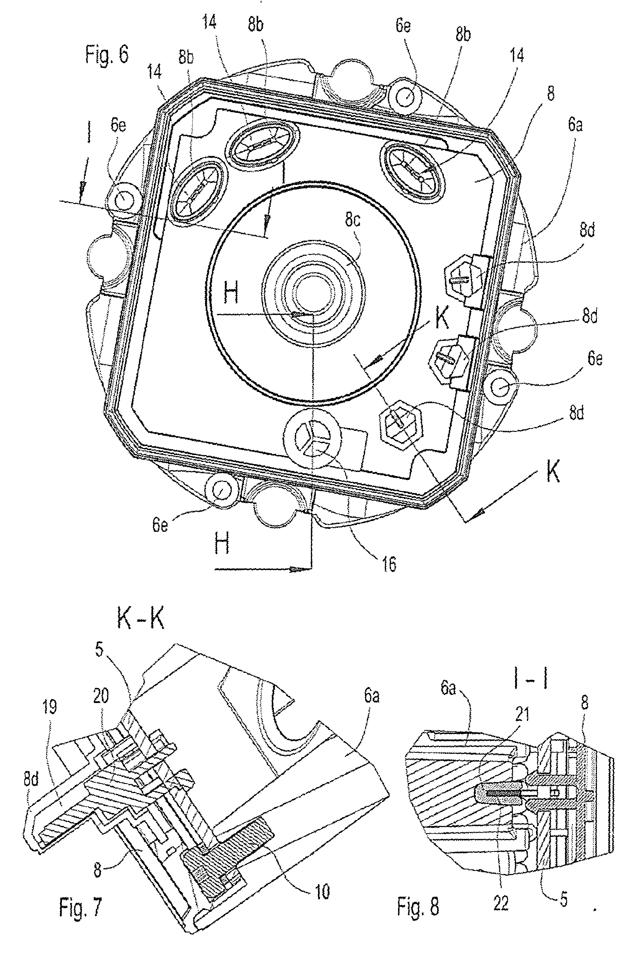

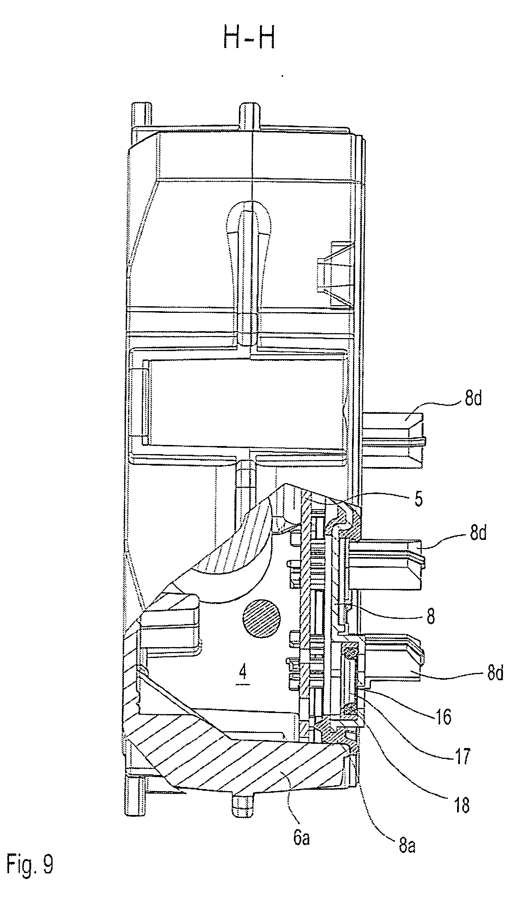

Wie zunächst aus dem unteren Teil von Fig. 1 hervorgeht, weist das Loch-Dichtungsteil 11 Wannen - im Folgenden als Scheiben-Wannen 13 bezeichnet - zur Aufnahme der Dichtungsmasse 12 auf, bei der es sich im Verarbeitungszustand insbesondere um eine thixotrope Flüssigkeit handeln kann. Anschaulichere Darstellungen der Scheiben-Wannen 13 zeigen Fig. 4 und 5. Zur Montage mit der Gehäuse-Baueinheit GB wird das Loch-Dichtungsteil 11 mit den Scheiben-Wannen 13 zunächst auf die Anschlußelemente 7 aufgeschoben. Das Loch-Dichtungsteil 11 weist im Bereich der Scheiben-Wannen 13 - nur in Fig. 5 gezeigte - schlitzartige Durchgriff-Öffnungen 11a zur Durchführung der, insbesondere als Flachstecker ausgebildeten, Anschlußelemente 7 auf. Die Scheiben-Wannen 13 können dabei jeweils in Anpassung an die schlitzartigen Durchgriff-Öffnungen 11a - wie dargestellt insbesondere eine im Grundriß elliptische Form aufweisen.

Um Rissbildungen im Loch-Dichtungsteil 11 im Bereich der Durchgriff-Öffnungen 11a beim Einfügen der Anschlusselemente 7 zu vermeiden, können die Anschlusselemente 7 eine unterschiedliche Breite aufweisen. Hierbei durchgreift beim Zusammenfügen der Teile zunächst ein schmalerer Bereich die Durchgriff-Öffnungen 11a, gefolgt von einem breiteren Fußbereich. Der erste Bereich kann lediglich gestanzt sein und eventuell noch etwas scharfkantige Ecken aufweisen, während der etwas breitere Fußbereich an seinen Kanten bevorzugt rund geprägt sein sollte, wodurch eine mögliche Beschädigung des Loch-Dichtungsteils 11 durch Rissbildung verhindert wird.

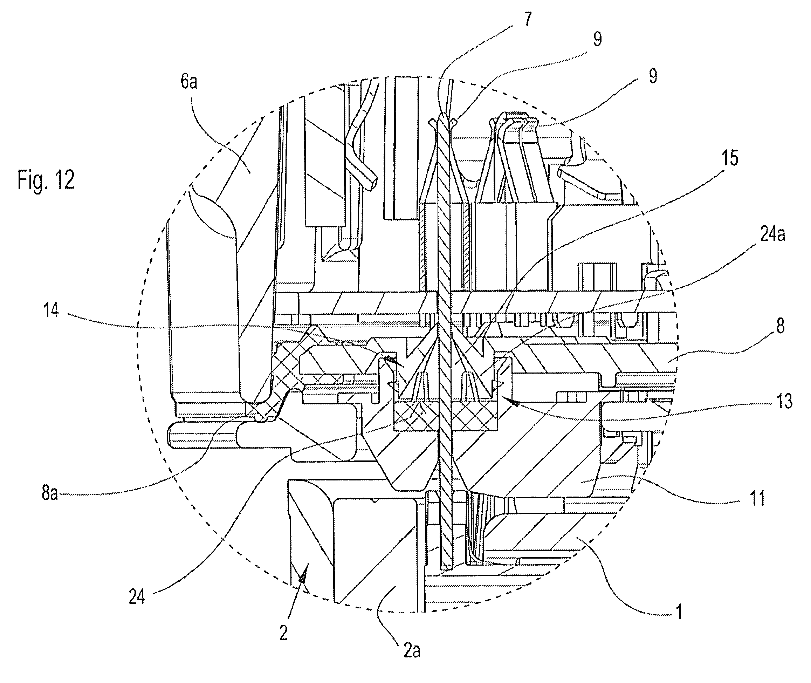

Auch die Zwischenwand 8 kann jeweils ihre Durchgriff-Öffnungen 8b zur Durchführung der Anschlußelemente 7 umgebende Wannen - im Weiteren als Platten-Wannen 14 bezeichnet - zur Aufnahme der Dichtungsmasse 12 aufweisen. Diese Platten-Wannen 14 sind im oberen Teil von Fig. 1, in Fig. 2, deutlicher in Fig. 3 sowie auch in Fig. 6 und 11 zu sehen. Wie die Scheiben-Wannen 13 können die Platten-Wannen 14 jeweils in Anpassung an eine schlitzartige Form der Durchgriff-Öffnungen 8b im Grundriß elliptisch ausgebildet sein.

Die Platten-Wannen 14 können dabei jeweils derart komplementär zu den Scheiben-Wannen 13 ausgebildet sein, daß sie jeweils mit den Scheiben-Wannen 13 einen durch zwei Halbschalen umschlossenen gekapselten - nur in Fig. 3 mit dem Bezugszeichen 15 bezeichneten - Raum bilden. Die Wannen 13, 14 können mit Vorteil insbesondere derart konstruiert sein, daß bei der Montage ein Nut-Feder-System entsteht. Anschlußelemente 7 und Scheiben-Wanne 13 bilden zusammen die Nut, das Gegenstück in der Zwischenplatte 8 die Feder. Dieses Gegenstück verdrängt die eindosierte Masse und sorgt so für die vollständige Benetzung aller beteiligten Bauteile. Zu diesem Zweck können die Platten-Wannen 14 - im Gegensatz zu den Scheiben-Wannen 13 - über ihre Höhe jeweils trichterartig ausgebildet sein. Solchermaßen sind die notwendigen Fügespalte dabei so gewählt, daß der kleinste Spalt in der Steckerdurchführung entsteht. Dies bewirkt zunächst das Anpressen der Masse an den Flachstecker (Anschlußelement 7) und anschließend das Austreten der überschüssigen Dichtungsmasse 12 am Fügespalt zwischen Scheiben-Wanne 13 und Zwischenwand 8.

Mit dieser Art der Verbindung von Loch-Dichtungsteil 11 und Zwischenwand 8 gehen folgende Vorteile einher: wegen des großen möglichen Verdrängungsvolumens eine Unempfindlichkeit gegen Bauteiltoleranzen, eine Unempfindlichkeit gegenüber Veränderungen am - oftmals als Stanz-Biege-Teil ausgeführten und daher mit einem Grat versehenen - Anschlußelement 7, wodurch die Gefahr vermieden wird, daß eine Schneide gebildet wird, die bei der Montage von Gummiteilen zu deren Beschädigung führen könnte. Außerdem ist die Möglichkeit einer unmittelbaren Weitermontage gegeben, da der Abbindevorgang der Dichtungsmasse 12 im gekapselten Raum 15, d. h. im montierten Zustand und lageunabhängig erfolgen kann. Des Weiteren erfolgt eine kräftefreie Abdichtung des Elektronikgehäuses 6, wobei die Scheiben-Wanne 13 auch die Funktion der Steckerpositionierung übernehmen und die Anschlußelemente 7 gegenüber dem Stator 1 elektrisch isolieren kann.

Fig. 6 bis 9 veranschaulichen weitere mögliche vorteilhafte Details eines erfindungsgemäßen Elektromotors. So zeigt Fig. 6 und auch der Schnitt in Fig. 9, daß die Zwischenwand 8 eine durch eine flüssigkeitsdichte und gasdurchlässige Membran 16 verschlossene, vorzugsweise mit einer umlaufenden Membran-Dichtlippe 18 umgebene, Druckausgleichs-Öffnung 17 aufweist.

Fig. 4 und 6 zeigen auch bisher nicht erwähnte Verschraubungsöffnungen 6e, 6f am Gehäusedeckel 6a und am Gehäuseboden 6b zur gegenseitigen Verbindung der genannten Teile.

Des Weiteren kann vorgesehen sein, daß die Zwischenwand 8 in domartigen Aufsätzen 8d gebildete taschenartige Hohlräume 19 zur Aufnahme von Sensoren 20, wie Hall-Schaltkreisen zur Positions- bzw. Drehwinkeldetektierung des Motors 3, aufweist. Dies verdeutlicht insbesondere Fig. 7.

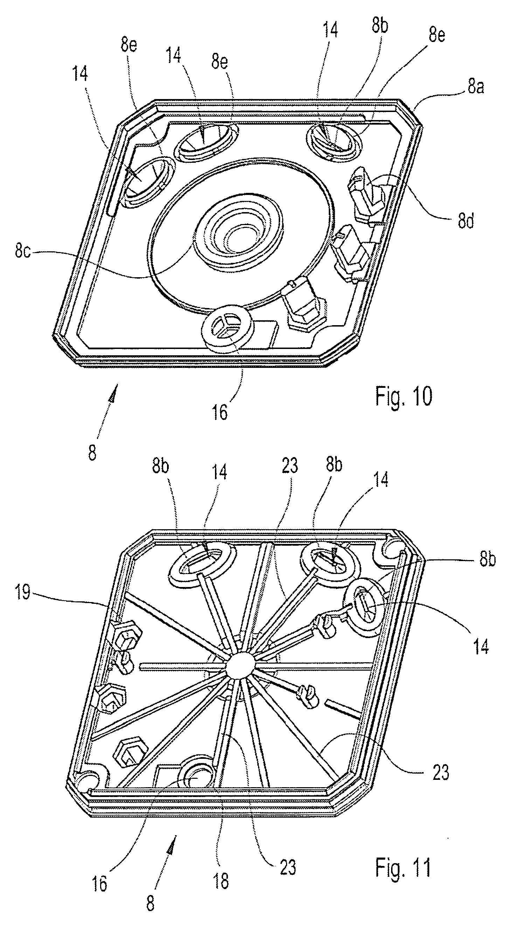

Fig. 8 zeigt, daß die mit der Steuerelektronik bestückte Leiterplatte 5 über ein besonders wärmeleitfähiges Teil 21, wie z. B. ein sogenanntes Gap-Pad, mit dem insbesondere metallischen Deckel 6a des Elektronikgehäuses 6 verbunden sein kann. Hierbei kann - wie dargestellt - das wärmeleitfähige Teil 21 gefaltet vorliegen und einen auf der Leiterplatte kontaktierten Widerstandsstreifen 22 umschließen, indem es diesen kühlt.

Wie bereits erwähnt zeigen Fig. 10 und 11 zwei unterschiedliche perspektivische Ansichten der bisher als bevorzugt beschriebenen Ausführung der Zwischenwand 8 des erfindungsgemäßen Elektromotors. Aus Fig. 10 wird dabei eine bisher nicht erwähnte und in den anderen Figuren ungenügend erkennbare vorteilhafte Einzelheit deutlich - nämlich, daß die Zwischenwand 8 zur Abdichtung der Durchgriff-Öffnungen 8b im Bereich der Platten-Wannen 14 in bevorzugter Ausführung die Durchgriff-Öffnungen 14 umrandende Element-Dichtlippen 8e aufweisen kann.

Beide Figuren (10 und 11) zeigen des Weiteren ein anderes technologisch vorteilhaftes Detail der Erfindung - und zwar, daß die Zwischenwand 8 mit der Rand-Dichtlippe 8a, den Element-Dichtlippen 8e, der Membran 16, der Membran-Dichtlippe 18 und/oder der Wellendichtung 8c als, vorzugsweise in einem zweistufigen Spritz- oder Druckgußverfahren hergestelltes, Zweikomponenten-Kunststoffteil ausgeführt sein kann, wobei die Zwischenwand 8 aus einer thermoplastischen Hartkomponente, wie einem Polyolefin, z. B. glasfaserverstärktem Polyamid, und die Dichtlippen 8a, 8e, 18, die flüssigkeitsdichte und gasdurchlässige Membran 16 der Druckausgleichs-Öffnung und/oder die Wellen-Dichtung 8c aus einer elastomeren und/oder thermoplastischen Weichkomponente, wie einem thermoplastischen Elastomer, bestehen kann. Die in Fig. 11 dargestellte perspektivische Aufsicht auf die im Einbauzustand dem Deckel 6a des Elektronikgehäuses 6 zugewandte Seite der Zwischenwand 8 zeigt dabei Stege 23 der Weichkomponente, die nach dem Gießen an der Zwischenwand 8 verbleiben können.

Die bei der Figurenbeschreibung bereits erwähnte, in Fig. 12 dargestellte, zweite, alternative Ausführung eines erfindungsgemäßen Elektromotors unterscheidet sich von der ersten Ausführung dadurch, daß auf den Böden der Scheiben-Wannen 13 des Loch-Dichtungsteils 11 anstelle der Dichtungsmasse 12 ein separates, vorzugsweise elastomeres, wie aus Silikonkautschuk bestehendes, die Anschlußelemente 7 umfassendes Dichtungs-Einsatzteil 24 aufliegt. Das Dichtungs-Einsatzteil 24 ist in seinem Grundriß formschlüssig an den Grundriß der Wannen 13, 14 angepaßt und weist auf seiner Ober- und Unterseite noppenartige Vorsprünge 24a auf, die druckfederartig mit den trichterartigen Wänden der Platten-Wannen 14 zusammenwirken und so zu einer Verankerung in den Wannen 13, 14 führen können. Auch eine Verankerung in zusätzlich eingebrachter Dichtungsmasse 12 ist denkbar. Auf Grund der gewählten Schnittebene in Fig. 12 ist lediglich die Oberseite des Dichtungs-Einsatzteils 24 erkennbar.

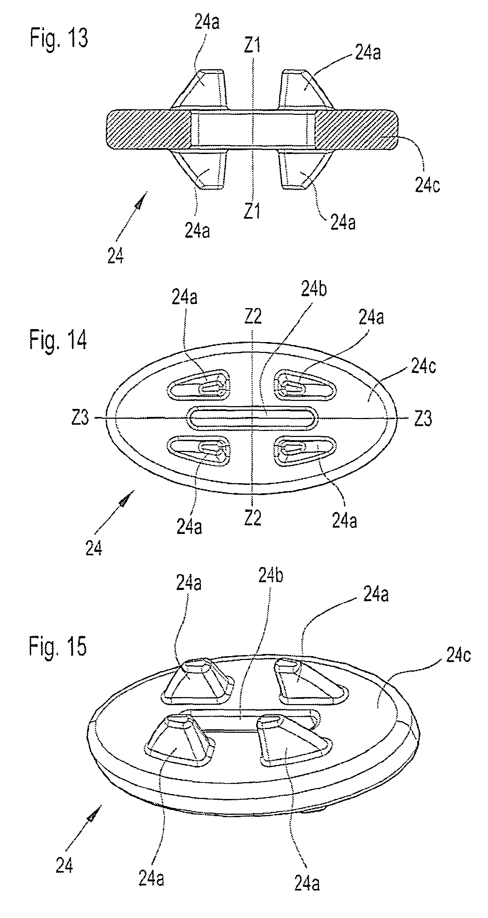

Die Fig. 13, 14 und 15 zeigen im Längsschnitt, in der Draufsicht und in einer perspektivischen Ansicht das in Fig. 12 dargestellte Dichtungs-Einsatzteil 24, bei dem - jeweils beidseitig eines Längsschlitzes 24b im Grundkörper 24c - sowohl auf der Oberseite, als auch auf der Unterseite insgesamt acht gleich große noppenartige Vorsprünge 24a vorgesehen sind. Dadurch entsteht eine Symmetrie, die die Montage des Teils erleichtert, weil dieses um die in Fig. 13 und 14 gezeigten drei Raumachsen Z1-Z1, Z2-Z2, Z3-Z3 jeweils um 180 ° gedreht, aber trotzdem lagerichtig in den Wannen 13, 14 plaziert werden kann.

In Anpassung an die Trichterform der Platten-Wannen 14 können die Vorsprünge insbesondere - wie gezeigt - im Wesentlichen die Form eines schiefen Kegelstumpfes aufweisen. Bei der in den Fig. 13 bis 15 gezeigten Ausführung des Dichtungs-Einsatzteils 24 ist es dabei von Vorteil, wenn die Scheiben-Wannen 13 des Loch-Dichtungsteils 11 einen durchbrochenen Wannenboden aufweisen, der dann durch das Dichtungs-Einsatzteil 24 verschließbar ist.

Wie bereits aus den vorstehenden Ausführungen hervorgeht, ist die vorliegende Erfindung ist nicht auf die dargestellten Ausführungsbeispiele beschränkt, sondern umfaßt alle im Sinne der Erfindung gleichwirkenden Mittel und Maßnahmen. So könnte beispielsweise bei einer stiftartigen Ausbildung die Form der Anschlußelemente 7 und damit verbunden die Form der Durchgriff-Öffnungen 8b, 11 b in der Zwischenwand 8 bzw. im Loch-Dichtungsteil 11 und gegebenenfalls der Längsschlitze 24b des Dichtungs-Einsatzteils 24 sowie die Form der Wannen 13, 14 von den dargestellten Formen abweichen.

Auch muß es sich nicht zwangsläufig - wie dargestellt - um einen elektronisch kommutierten Außenläufer-Gleichstrommotor handeln, sondern auch ein anderer Elektromotor, der die nicht fakultativen Merkmale des Anspruchs 1 aufweist, indem er beispielsweise in dem Elektronikgehäuse 6 ausschließlich Komponenten enthält, die nicht der Kommutierung dienen, fällt in den Rahmen der Erfindung. '

### Bezugszeichen

- 1: Stator
- 1a: Statorblechpaket von 1
- 1b: Lagertragrohr für 1a
- 2: Rotor
- 2a: Permanentmagnet von 2
- 3: Motorwelle
- 4: Innenraum von 6
- 5: Leiterplatte
- 6: Gehäuse
- 6a: Deckel von 6
- 6b: Boden von 6
- 6c: Anschlußöffnungen in 6b für 7
- 6d: Durchbruch in 6b
- 6e: Verschraubungsöffnung von 6a
- 6f: Verschraubungsöffnung von 6b
- 7: Anschlußelemente
- 8: Zwischenwand
- 8a: Rand-Dichtlippe von 8
- 8b: Durchgriff-Öffnungen für 7 in 8
- 8c: Wellendichtung für 6d
- 8d: Aufsatz von 8
- 8e: Element-Dichtlippe um 8b
- 9: Abstand zwischen 8 und 5
- 10: Schraube zur Befestigung von 5 an 6a
- 11: Loch-Dichtungsteil für 6c
- 11 a: Durchgriff-Öffnung für 7 in 11
- 12: Dichtungsmasse
- 13: Scheiben-Wanne von 11
- 14: Platten-Wanne von 8
- 15: gekapselter Raum zwischen 13 und 14
- 16: Membran für 17
- 17: Druckausgleichs-Öffnung in 8
- 18: Membran-Dichtlippe um 17
- 19: Hohlraum in 8d
- 20: Sensor
- 21: hoch wärmeleitfähiges Teil in 4
- 22: Widerstandsstreifen
- 23: Steg an 8 (Weichkomponente)
- 24: Dichtungs-Einsatzteil für 13, 14
- 24a: Vorsprung an 24
- 24b: Längsschlitz in 24 für 7
- 24c: Grundkörper von 24

- GB: Gehäuse-Baueinheit
- MB: Motor-Baueinheit
- Z1-Z1: erste Raumachse durch 24
- Z2-Z2: zweite Raumachse durch 24
- Z3-Z3: dritte Raumachse durch 24

## Patentansprüche

1. Elektromotor mit hohem Schutzgrad gegen das Eindringen von Fremdkörpern und Nässe, insbesondere elektronisch kommutierter Außenläufer-Gleichstrommotor, mit einem Stator (1), mit einem Rotor (2) und mit einem quer zur Motorwelle (3) verlaufenden, in seinem Innenraum (4) eine Leiterplatte (5) mit Steuer-, Regel- bzw. Kommutierungselektronik aufnehmenden Elektronikgehäuse, (6) wobei sich in einem Boden (6b) des Elektronikgehäuses (6) Anschlußöffnungen (6c) befinden, die von den Stator (1) und die Leiterplatte (5) miteinander verbindenden Anschlußelementen (7) durchgriffen werden und wobei eine Dichtung (8, 8a, 8c, 8e, 11, 12, 18, 24) zumindest die von den Anschlußelementen (7) durchgriffenen Anschlußöffnungen (6c) des Bodens (6b) des Elektronikgehäuses (6) abdichtet,
**dadurch gekennzeichnet, daß** die Dichtung (8, 8a, 8c, 8e, 11, 12, 18, 24) eine auf dem Boden (6c) des Elektronikgehäuses (6) angeordnete plattenartige Zwischenwand (8) umfaßt, die einerseits den Innenraum (4) des Elektronikgehäuses (6) und andererseits einen Spalt zwischen dem Elektronikgehäuse (6) und einer aus dem Stator (1) und dem Rotor (2) gebildeten Motorbaueinheit (MB) abdichtet.

2. Motor nach Anspruch 1,
**dadurch gekennzeichnet, daß** die Zwischenwand (8) zur Abdichtung gegenüber einem Deckel (6a) des Elektronikgehäuses (6) eine umlaufende Rand-Dichtlippe (8a) aufweist.

3. Motor nach Anspruch 1 oder 2,
**dadurch gekennzeichnet, daß** die Zwischenwand (8) Durchgriff-Öffnungen (8b) zur Durchführung der Anschlußelemente (7) aufweist.

4. Motor nach Anspruch 3,
**dadurch gekennzeichnet, daß** die Zwischenwand (8) zur Abdichtung der Durchgriff-Öffnungen (8b) die Durchgriff-Öffnungen (8b) umrandende Element-Dichtlippen (8e) aufweist.

5. Motor nach einem der Ansprüche 1 bis 4,
**dadurch gekennzeichnet, daß** die Zwischenwand (8) eine durch eine flexible Membran (16) verschlossene, vorzugsweise mit einer umlaufenden Membran-Dichtlippe (18) umgebene, Druckausgleichs-Öffnung (17) aufweist.

6. Motor nach einem der Ansprüche 1 bis 5,
**dadurch gekennzeichnet, daß** der Boden (6b) des Elektronikgehäuses (6) einen zentrisch angeordneten Durchbruch (6d) zur Aufnahme der Motorwelle (3) aufweist und daß an der Zwischenwand (8) eine Wellen-Dichtung (8c) zur Randabdichtung dieses Durchbruchs (6d) angeordnet ist.

7. Motor nach einem der Ansprüche 2 bis 6,
**dadurch gekennzeichnet, daß** die Zwischenwand (8) mit der Rand-Dichtlippe (8a), den Element-Dichtlippen (8e), der Membran (16), der Membran-Dichtlippe (18) und/oder der Wellendichtung (8c) als, vorzugsweise in einem zweistufigen Spritzgießverfahren hergestelltes, Zweikomponenten-Kunststoffteil ausgeführt ist, wobei die Zwischenwand (8) aus einer thermoplastischen Hartkomponente, wie einem Polyolefin, z. B. glasfaserverstärktem Polypropylen, und die Dichtlippen (8a, 8e), die Membran (16) und/oder die Wellen-Dichtung (8c) aus einer elastomeren und/oder thermoplastischen Weichkomponente, wie einem thermoplastischen Elastomer, bestehen.

8. Motor nach einem der Ansprüche 3 bis 6,
**dadurch gekennzeichnet, daß** die Zwischenwand (8) jeweils die Durchgriff-Öffnungen (8b) zur Durchführung der Anschlußelemente (7) umgebende Platten-Wannen (14) zur Aufnahme einer Dichtungsmasse (12) und/oder eines Dichtungs-Einsatzteils (24) aufweist.

9. Motor nach Anspruch 8,
**dadurch gekennzeichnet, daß** die Platten-Wannen (14) jeweils in Anpassung an eine schlitzartige Form der Durchgriff-Öffnungen (8b) zur Durchführung der, insbesondere als Flachstecker ausgebildeten, Anschlußelemente (7) im Grundriß elliptisch ausgebildet sind.

10. Motor nach Anspruch 8 oder 9,
**dadurch gekennzeichnet, daß** die Platten-Wannen (14) über ihre Höhe jeweils trichterartig ausgebildet sind.

11. Motor nach einem der Ansprüche 1 bis 10,
**dadurch gekennzeichnet, daß** die Zwischenwand (8) in domartigen Aufsätzen (8d) gebildete taschenartige Hohlräume (19) zur Aufnahme von Sensoren, (20) wie Hall-Schaltkreisen zur Positionsdetektierung der Motorwelle (3), aufweist.

12. Motor nach einem der Ansprüche 1 bis 11,
**dadurch gekennzeichnet, daß** die Dichtung (8, 8a, 8c, 8e, 11, 12, 18, 24) ein an der plattenartigen Zwischenwand (8) zur Anlage kommendes, scheibenartiges Loch-Dichtungsteil (11) umfaßt, das einerseits, bevorzugt formschlüssig und dabei insbesondere verrastend, in die Anschlußöffnungen (6c) des Bodens (6b) des Elektronikgehäuses (6) eingreift und andererseits mit der Zwischenwand (8), insbesondere stoffschlüssig, verbindbar ist.

13. Motor nach Anspruch 12,
**dadurch gekennzeichnet, daß** das Loch-Dichtungsteil (11) aus einem thermoplastischen Hartstoff, z. B. glasfaserverstärktem Polyamid, besteht.

14. Motor nach Anspruch 12 oder 13,
**dadurch gekennzeichnet, daß** das Loch-Dichtungsteil (11) Scheiben-Wannen (13) zur Aufnahme einer Dichtungsmasse (12) und/oder eines Dichtungs-Einsatzteils (24) aufweist, wobei die Scheiben-Wannen (13) jeweils derart komplementär zu den Platten-Wannen (14) der Zwischenwand (4) ausgebildet sind, daß sie jeweils mit den Platten-Wannen (14) einen durch zwei Halbschalen umschlossenen gekapselten Raum (15) bilden.

15. Motor nach einem der Ansprüche 12 bis 14,
**dadurch gekennzeichnet, daß** die Scheiben-Wannen (13) des Loch-Dichtungsteils (11) einen vorzugsweise durchbrochenen Wannenboden aufweisen, der durch ein separates, vorzugsweise elastomeres, wie aus Silikonkautschuk bestehendes, die Anschlußelemente (11) umfassendes Dichtungs-Einsatzteil (24) abdeckbar und/oder verschließbar ist.

16. Motor nach Anspruch 15,
**dadurch gekennzeichnet, daß** das Dichtungs-Einsatzteil (24) auf seiner Oberseite und/oder auf seiner Unterseite noppenartige Vorsprünge (24a) zur Verankerung im Wannenboden und/oder in der/einer Dichtungsmasse (12) aufweist.

17. Motor nach einem der Ansprüche 1 bis 16,
**dadurch gekennzeichnet, daß** das Elektronikgehäuse (6), sowohl dessen Boden (6b), als auch dessen Deckel (6a), aus Metall, wie aus einer Aluminium-Druckgußlegierung, besteht.

18. Motor nach einem der Ansprüche 2 bis 17,
**dadurch gekennzeichnet, daß** der Deckel (6a) des Elektronikgehäuses (6) mit der Zwischenwand (8) und gegebenenfalls dem Loch-Dichtungsteil (11) sowie dem Dichtungs-Einsatzteil (24) eine abgeschlossene, auf eine Motor-Baueinheit (MB), die insbesondere den Boden (6b) des Elektronikgehäuses (6) umfaßt, aufsteckbare und mit der Motor-Baueinheit (MB) insbesondere verschraubbare, vormontierbare Gehäuse-Baueinheit (GB) bildet.

19. Motor nach einem der Ansprüche 1 bis 18,
**dadurch gekennzeichnet, daß** der Boden (6b) des Elektronikgehäuses (6) durch einen, insbesondere einstückig mit einem Lagertragrohr (1 b) des Stators (1) für dessen Blechpaket verbundenen, Statorflansch gebildet ist.

## Claims

1. Electric motor having a high degree of protection against the ingress of foreign matter and moisture, in particular an electronically commutated external-rotor DC motor, having a stator (1), having a rotor (2) and having an electronics housing (6) which extends transversely with respect to the motor shaft (3) and accommodates, in its interior (4), a printed circuit board (5) having control, regulating or commutating electronics, connection openings (6c) being located in a base (6b) of the electronics housing (6), connection elements (7), which connect the stator (1) and the printed circuit board (5) to one another, passing through the connection openings (6c), and a seal (8, 8a, 8c, 8e, 11, 12, 18, 24) sealing at least the connection openings (6c) in the base (6b) of the electronics housing (6) through which the connection elements (7) pass,
**characterised in that** the seal (8, 8a, 8c, 8e, 11, 12, 18, 24) comprises a plate-like partition wall (8) which is arranged on the base (6c) of the electronics housing (6) and which, on the one hand, seals the interior (4) of the electronics housing (6) and, on the other hand, seals a gap between the electronics housing (6) and a motor unit (MB) formed from the stator (1) and the rotor (2).

2. Motor according to Claim 1, **characterised in that** the partition wall (8) has a peripheral edge sealing lip (8a) for sealing with respect to a cover (6a) of the electronics housing (6).

3. Motor according to Claim 1 or 2, **characterised in that** the partition wall (8) has through openings (8b) for passing through the connection elements (7).

4. Motor according to Claim 3, **characterised in that** the partition wall (8) has element sealing lips (8e) which run around the edge of the through openings (8b) for the purpose of sealing the through openings (8b).

5. Motor according to one of Claims 1 to 4, **characterised in that** the partition wall (8) has a pressure compensation opening (17) which is closed by a flexible membrane (16) and surrounded by a peripheral membrane sealing lip (18).

6. Motor according to one of Claims 1 to 5, **characterised in that** the base (6b) of the electronics housing (6) has a centrically arranged aperture (6d) for the purpose of accommodating the motor shaft (3), and **in that** a shaft seal (8c) is arranged on the partition wall (8) for the purpose of sealing the edge of this aperture (6d).

7. Motor according to one of Claims 2 to 6, **characterised in that** the partition wall (8) with the edge sealing lip (8a), the element sealing lips (8e), the membrane (16), the membrane sealing lip (18) and/or the shaft seal (8c) is in the form of a two-component plastic part which is preferably produced in a two-stage injection moulding process, the partition wall (8) being made from a thermoplastic hard component, such as a polyolefin, for example glass-fibre-reinforced polypropylene, and the sealing lips (8a, 8e), the membrane (16) and/or the shaft seal (8c) being made from an elastomeric and/or thermoplastic soft component, such as a thermoplastic elastomer.

8. Motor according to one of Claims 3 to 6, **characterised in that** the partition wall (8) has plate troughs (14), which in each case surround the through openings (8b) for passing through the connection elements (7), for the purpose of accommodating a sealing compound (12) and/or a sealing insert part (24).

9. Motor according to Claim 8, **characterised in that** the plate troughs (14) are in each case elliptical in plan view and matched to a slot-like shape of the through openings (8b) for passing through the connection elements (7), which are, in particular, in the form of flat connectors.

10. Motor according to Claim 8 or 9, **characterised in that** the plate troughs (14) are in each case in the form of funnels over their height.

11. Motor according to one of Claims 1 to 10, **characterised in that** the partition wall (8) has pocket-like cavities (19), which are formed in dome-like attachments (8d), for the purpose of accommodating sensors (20), such as Hall circuits, for the purpose of detecting the position of the motor shaft (3).

12. Motor according to one of Claims 1 to 11, **characterised in that** the seal (8, 8a, 8c, 8e, 11, 12, 18, 24) comprises a disc-like hole sealing part (11) which comes to bear against the plate-like partition wall (8) and which, on the one hand, engages in the connection openings (6c) in the base (6b) of the electronics housing (6), preferably in a form-fitting and at the same time in particular a latching manner, and, on the other hand, can be connected to the partition wall (8), in particular in a materially joined manner.

13. Motor according to Claim 12, **characterised in that** the hole sealing part (11) is made from a thermoplastic hard material, for example glass-fibre-reinforced polyamide.

14. Motor according to Claim 12 or 13, **characterised in that** the hole sealing part (11) has disc troughs (13) for the purpose of accommodating a sealing compound (12) and/or a sealing insert part (24), the disc troughs (13) in each case being formed in complementary fashion to the plate troughs (14) of the partition wall (4) such that they form, in each case with the plate troughs (14), an encapsulated space (15) which is enclosed by two half-shells.

15. Motor according to one of Claims 12 to 14, **characterised in that** the disc troughs (13) of the hole sealing part (11) have a preferably apertured trough base which can be covered and/or closed by a separate sealing insert part (24) which surrounds the connection elements (11) and is preferably made from an elastomeric material, such as silicone rubber.

16. Motor according to Claim 15, **characterised in that** the sealing insert part (24) has, on its upper side and/or on its underside, knob-like projections (24a) for the purpose of anchoring it in the trough base and/or in the/a sealing compound (12).

17. Motor according to one of Claims 1 to 16, **characterised in that** the electronics housing (6), both its base (6b) and its cover (6a), are made from metal, such as an aluminium die-casting alloy.

18. Motor according to one of Claims 2 to 17, **characterised in that** the cover (6a) of the electronics housing (6) with the partition wall (8) and, where appropriate, the hole sealing part (11) and the sealing insert part (24) forms a housing unit (GB) which is closed off and can be plugged onto a motor unit (MB), comprising in particular the base (6b) of the electronics housing (6), and be preassembled with, in particular screwed to, the motor unit (MB).

19. Motor according to one of Claims 1 to 18, **characterised in that** the base (6b) of the electronics housing (6) is formed by a stator flange which is connected, in particular integrally, to a bearing supporting tube (1b) of the stator (1) for its laminated core.

## Revendications

1. Moteur électrique à degré élevé de protection contre la pénétration de corps étrangers et d'humidité, en particulier moteur à courant continu à induit extérieur, comprenant un stator (1), un rotor (2) et un boîtier électronique (6) s'étendant transversalement à l'arbre du moteur (3), ce boîtier logeant dans son espace intérieur (4) une plaque conductrice (5) munie d'un système électronique de commande, de régulation et de commutation, étant entendu que dans un fond (6b) du boîtier électronique (6), se trouvent des ouvertures de raccordement (6c), qui sont traversées par des éléments de raccordement (7) reliant l'un à l'autre le stator (1) et la plaque conductrice (5) et étant entendu qu'une étanchéité (8, 8a, 8c, 8e, 11, 12, 18, 24) assure au moins l'étanchéité des ouvertures de raccordement (6c) du fond (6b) du boîtier électronique (6) traversées par les éléments de raccordement (7),
**caractérisé en ce que** l'étanchéité (8, 8a, 8c, 8e, 11, 12, 18, 24) comprend une paroi intermédiaire (8) sous forme de plaque disposée sur le fond (6c) du boîtier électronique (6), qui assure l'étanchéité, d'une part de l'espace intérieur (4) du boîtier électronique (6) et d'autre part, d'une fente située entre le boîtier électronique (6) et une unité de construction du moteur (MB) constituée du stator (1) et du rotor (2).

2. Moteur selon la revendication 1,
**caractérisé en ce que** la paroi intermédiaire (8) présente pour l'étanchéité par rapport à un couvercle (6a) du boîtier électronique (6) une lèvre d'étanchéité périphérique de bordure (8a).

3. Moteur selon la revendication 1 ou 2,
**caractérisé en ce que** la paroi intermédiaire (8) présente des ouvertures traversantes (8b) pour le passage des éléments de raccordement (7).

4. Moteur selon la revendication 3,
**caractérisé en ce que** la paroi intermédiaire (8) présente pour l'étanchéité des ouvertures traversantes (8b) des lèvres d'étanchéité-élément (8e) bordant les ouvertures traversantes (8b).

5. Moteur selon l'une quelconque des revendications 1 à 4,
**caractérisé en ce que** la paroi intermédiaire (8) présente une ouverture d'équilibrage de pression (17) fermée par une membrane flexible (16), entourée de préférence d'une lèvre d'étanchéité-membrane (18) périphérique.

6. Moteur selon l'une quelconque des revendications 1 à 5,
**caractérisé en ce que** le fond (6b) du boîtier électronique (6) présente un passage (6d) placé de manière centrale pour le logement de l'arbre du moteur (3) et **en ce que** sur la paroi intermédiaire (8) est placée une étanchéité d'arbre (8c) pour l'étanchéité en bordure de ce passage (6d).

7. Moteur selon l'une quelconque des revendications 2 à 6,
**caractérisé en ce que** la paroi intermédiaire (8) comprenant la lèvre d'étanchéité de bordure (8a), les lèvres d'étanchéité-élément (8e), la membrane (16), la lèvre d'étanchéité-membrane (18) et/ou l'étanchéité d'arbre (8c) est conçue comme pièce en matière synthétique à deux composants, fabriquée de préférence dans un procédé de moulage par injection à deux étapes, étant entendu que la paroi intermédiaire (8) se compose d'un composant dur thermoplastique comme une polyoléfine, par exemple du polypropylène renforcé par fibres de verre, et les lèvres d'étanchéité (8a, 8e), la membrane (16) et/ou l'étanchéité d'arbre (8c) d'un composant mou élastomère et/ou thermoplastique comme un élastomère thermoplastique.

8. Moteur selon l'une quelconque des revendications 3 à 6,
**caractérisé en ce que** la paroi intermédiaire (8) présente respectivement les ouvertures traversantes (8b) pour le passage de plaques-cuves (14) entourant les éléments de raccordement (7) pour le logement d'une masse d'étanchéité (12) et/ou d'une pièce rapportée d'étanchéité (24).

9. Moteur selon la revendication 8,
**caractérisé en ce que** les plaques-cuves (14) sont conçues respectivement de manière elliptique dans leur plan horizontal en adaptation à une forme à la manière d'une fente des ouvertures traversantes (8b) pour le passage des éléments de raccordement (7) conçus en particulier comme fiches plates.

10. Moteur selon la revendication 8 ou 9,
**caractérisé en ce que** les plaques-cuves (14) sont conçues sur leur hauteur respectivement à la manière d'entonnoir.

11. Moteur selon l'une quelconque des revendications 1 à 10,
**caractérisé en ce que** la paroi intermédiaire (8) présente dans des chapeaux en forme de coupole (8d) des cavités formées en forme de poche (19) pour le logement de capteurs (20) comme des circuits à effet de Hall pour la détection de position de l'arbre du moteur (3).

12. Moteur selon l'une quelconque des revendications 1 à 11,
**caractérisé en ce que** l'étanchéité (8, 8a, 8c, 8e, 11, 12, 18, 24) comprend une pièce d'étanchéité-orifice (11) en forme de disque, venant en appui contre la paroi intermédiaire en forme de plaque (8), pièce qui d'une part, pénètre, de manière privilégiée par concordance de forme et ainsi en particulier par encrantage, dans les ouvertures de raccordement (6c) du fond (6b) du boîtier électronique (6) et d'autre part, peut être reliée à la paroi intermédiaire (8), en particulier par concordance de substance.

13. Moteur selon la revendication 12,
**caractérisé en ce que** la pièce d'étanchéité-orifice (11) se compose d'une substance dure thermoplastique, par exemple d'un polyamide renforcé par fibres de verre.

14. Moteur selon la revendication 12 ou 13,
**caractérisé en ce que** la pièce d'étanchéité-orifice (11) présente des disques-cuves (13) pour le logement d'une masse d'étanchéité (12) et/ou d'une pièce rapportée d'étanchéité (24), étant entendu que les disques-cuves (13) sont conçus respectivement de manière complémentaire par rapport aux plaques-cuves (14) de la paroi intermédiaire (4) de façon à ce qu'ils forment respectivement avec les plaques-cuves (14) un espace (15) capsulé encerclé par deux demi-coques.

15. Moteur selon l'une quelconque des revendications 12 à 14,
**caractérisé en ce que** les disques-cuves (13) de la pièce d'étanchéité-orifice (11) présentent un fond de cuve de préférence ajouré, qui peut être refermé et/ou recouvert par une pièce rapportée d'étanchéité (24) séparée, se composant de préférence d'un élastomère comme du caoutchouc de silicone, comprenant les éléments de raccordement (11).

16. Moteur selon la revendication 15,
**caractérisé en ce que** la pièce rapportée d'étanchéité (24) présente sur sa face supérieure et/ou sur sa face inférieure des avancées (24a) à la manière de nopes pour l'ancrage dans le fond de cuve et/ou dans la/une masse d'étanchéité (12).

17. Moteur selon l'une quelconque des revendications 1 à 16,
**caractérisé en ce que** le boîtier électronique (6), aussi bien son fond (6b) que son couvercle (6a), se compose d'un métal tel qu'un alliage d'aluminium à coulée sous pression.

18. Moteur selon l'une quelconque des revendications 2 à 17,
**caractérisé en ce que** le couvercle (6a) du boîtier électronique (6) avec la paroi intermédiaire (8) et éventuellement la pièce rapportée-orifice (11) ainsi que la pièce rapportée d'étanchéité (24) présente une unité de construction carter (GB) pouvant être pré-montée, fermée, enfichable sur une unité de construction-moteur (MB) qui comprend en particulier le fond (6b) du boîtier électronique (6).

19. Moteur selon l'une quelconque des revendications 1 à 18,
**caractérisé en ce que** le fond (6b) du boîtier électronique (6) est formé par une bride de stator reliée en particulier de manière monobloc à un tube porteur de palier (1b) du stator (1) pour l'empilage de tôles de celui-ci.
